# EUROPÄISCHE PATENTSCHRIFT

(11) **EP 1 366 592 B1**
(45) Veröffentlichungstag und Bekanntmachung des Hinweises auf die Patenterteilung: **01.08.2007**
(21) Anmeldenummer: 02719971.0
(22) Anmeldetag: 28.02.2002
(51) Int. Cl.: H04L 7/033, H04L 7/04, H04B 7/26

(54) **SYNCHRONISATIONSVERFAHREN ZUR VERWENDUNG IN EINEM ULTRA-BREITBAND-KOMMUNIKATIONSSYSTEM**
SYNCHRONIZATION METHOD FOR USE IN AN ULTRA- BROADBAND COMMUNICATION SYSTEM
PROCEDE DE SYNCHRONISATION DESTINE A UN SYSTEME DE COMMUNICATION ULTRA-LARGE BANDE

(30) Priorität: 06.03.2001 DE 10110677; 06.03.2001 EP 01105590
(43) Veröffentlichungstag der Anmeldung: 03.12.2003
(73) Patentinhaber: SIEMENS AKTIENGESELLSCHAFT, 80333 München (DE)
(72) Erfinder: MOHR, Werner, 81737 München (DE)
(86) Internationale Anmeldenummer: PCT/EP2002/002183
(87) Internationale Veröffentlichungsnummer: WO 2002/071683

(56) Entgegenhaltungen:
- WO-A-00/42719
- WO-A-98/38737
- JP-A- 10 084 337
- US-A- 5 684 871
- US-A- 5 832 035
- US-A- 6 026 125
- US-A- 6 066 982

## Beschreibung

Die Erfindung betrifft ein Ultra-Breitband-Kommunikationssystem, eine Empfangseinheit für ein Ultra-Breitband-Kommunikationssystem, sowie ein Ultra-Breitband-Empfangsverfahren.

Bei Ultra-Breitband- bzw. UWB-Systemen ("UWB" = Ultra Wideband) werden Informationen in Form einer Folge von jeweils nur extrem kurz andauernden Impulsen übertragen. Die Impulsdauer liegt dabei im Piko- bzw. Nanosekundenbereich, im allgemeinen zwischen 100 Pikosekunden und 1 Nanosekunde.

Eine derart kurze Impulsdauer führt zu einer extrem großen Bandbreite des Übertragungssignals, und damit zu sehr geringen spektralen Leistungsdichten (Übertragungsleistung in Watt pro Hertz Bandbreite). UWB-Übertragungssignale können somit von unberechtigten Dritten nur schwer vom Grundrauschpegel unterschieden werden, und sind deshalb relativ abhörsicher.

Des weiteren können für die Übertragung von UWB-Signalen Frequenzbereiche verwendet werden, die gleichzeitig von anderen, nicht mit UWB-Signalen arbeitenden Nachrichtenübertragungssystemen benutzt werden. Durch die wie oben erwähnt niedrigen spektralen Leistungsdichten von UWB-Signalen wird die Signalübertragung der anderen Nachrichtensysteme durch die UWB-Signale nicht oder nur wenig gestört.

Bei UWB-Systemen wird - abhängig von der jeweils zu übertragenden Information - die Lage der gesendeten UWB-Impulse geändert (Impulslagemodulation bzw. PPM ("PPM" = pulse position modulation)). Beispielsweise überträgt eine Sendeeinheit einen einer zu übertragenden "1" zugeordneten UWB-Impuls IM1 geringfügig, z.B. einige trillionstel Sekunden früher, als einen UWB-Impuls IMO, mit dem eine "0" übertragen werden soll. Um in einer der Sendeeinheit zugeordneten Empfangseinheit eine exakte Decodierung der empfangenen Impulse zu gewährleisten, muß die Empfangseinheit genau synchronisiert sein.

Aus US 5,684,871 ist ein Empfänger zur Bestimmung einer Pulsposition eines sogenannten "tone burst" bekannt, wobei eine Synchronisation des Empfängers mit Hilfe eines zusätzlich übertragenen Synchronisationssignal realisiert wird.

Aus US 5,832,035 ist ein synchronisierter Empfänger für sogenannte "impulse radio signals" bekannt. Mit Hilfe einer Cross-Correlation, eines Integrators und eines "tresholddetectors" wird über eine einstellbare Zeitbasis ein synchronisierter Empfang realisiert.

Aus US 6,066,982 ist eine Demodulation eines sogenannten "pulse position modulated pulse signals" bekannt. Dabei wird mit Hilfe eines "pulse detection parts" und eines "motion clock generating parts" aus dem PPM Signal ein rauscharmes "pulse detection signal" erzeugt, das über einen "unlocking detection part" an einen "clock reproduction part" gelangt.

Die Erfindung hat zur Aufgabe, herkömmliche Ultra-Breitband-Empfangsverfahren, Ultra-Breitband-Kommunikationssysteme, sowie Empfangseinheiten für Ultra-Breitband-Kommunikationssysteme weiterzuentwickeln. Sie erreicht dieses und weitere Ziele durch die Gegenstände der Ansprüche 1, 5, 11 und 12.

Vorteilhafte Weiterbildungen der Erfindung sind in den Unteransprüchen angegeben.

Gemäß der vorliegenden Erfindung empfängt eine Empfangseinheit ein von einer Sendeeinheit ausgesendetes, impulslagemoduliertes Ultra-Breitband-Impulssignal. Das empfangene Ultra-Breitband-Impulssignal wird einerseits mit wiederhergestellten Ultra-Breitband-Impulsen multipliziert, die auf den Takt der Empfangseinheit bezogen früher auftreten und andererseits mit wiederhergestellten Ultra-Breitband-Impulsen multipliziert, die auf den Takt der Empfangseinheit bezogen später auftreten. Die bei den Multiplikationen erzeugten Multiplikationssignale werden zur Synchronisation der Empfangseinheit verwendet.

Gemäß der vorliegenden Erfindung werden die beiden erzeugten Multiplikationssignale tiefpaßgefiltert und dann addiert. Das Additionssignal wird zur Phasenregelung eines den Takt der Empfangseinheit erzeugenden Oszillators verwendet: mit Hilfe des Additionssignals kann ein VCO ("VCO" = Voltage Controlled Oscillator bzw. spannungsgesteuerter Oszillator) einer entsprechend wie bei herkömmlichen PLL-Schaltungen ("PLL" = Phase-Locked Loop bzw. Phasensynchronisationsschleife) aufgebauten Regelschleife so angesteuert werden, dass Taktabweichungen eliminiert werden. Auf diese Weise kann der Takt der Empfangseinheit entsprechend wie bei PLL-Schaltungen in den Fangbereich gebracht, und dann mit relativ hoher Genauigkeit im Fangbereich gehalten werden.

Im folgenden wird die Erfindung anhand eines Ausführungsbeispiels und der beigefügten Zeichnung näher erläutert. In der Zeichnung zeigt:
- Figur 1: eine schematische Darstellung eines Ausführungsbeispiels eines UWB-Übertragungssystems gemäß der vorliegenden Erfindung;
- Figur 2: eine Folge von UWB-Impulsen, die von den in Fig. 1 dargestellten UWB-Sendeeinheiten ausgesendet werden;
- Figur 3: eine Synchronisationseinheit, welche in,der in Fig. 1 dargestellten Empfangseinheit verwendet wird;
- Figur 4: Signaldiagramme von in der in Fig. 3 dargestellten Synchronisationseinheit vorkommenden Signalen;
- Figur 5: die aus FIG 3 bekannte Synchronisationseinheit mit detaillierter Signaldiagrammbezeichnung; und
- Figur 6,7: detaillierte Signaldiagramme zu Signalen, die in der in Figur 5 dargestellten Synchronisationseinheit vorkommen.

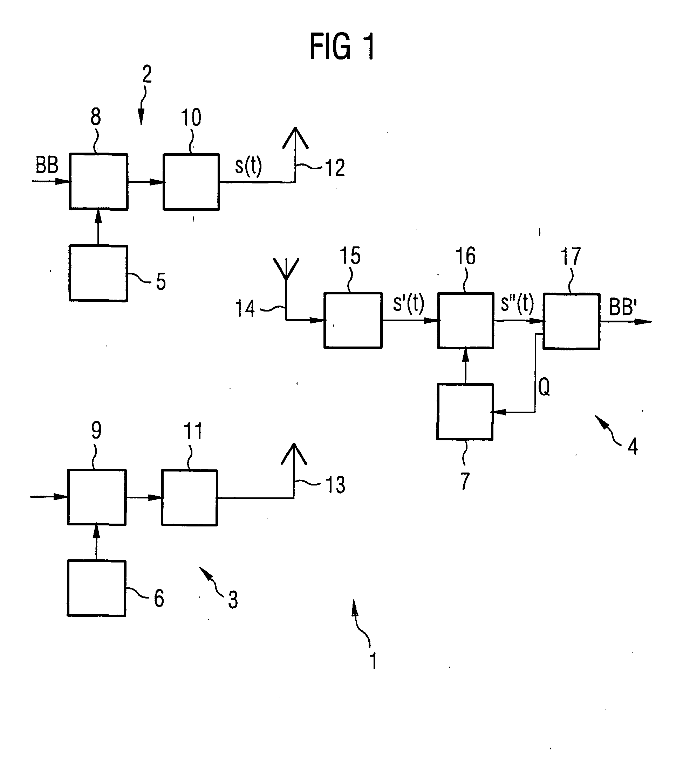

Figur 1 zeigt eine schematische Darstellung eines UWB-Übertragungssystems 1. Dieses weist eine erste Sendeeinheit 2, eine zweite Sendeinheit 3, eine Empfangseinheit 4, sowie weitere, hier nicht dargestellte Sende- und/oder Empfangseinheiten auf.

Die Sendeeinheiten 2, 3 enthalten jeweils eine Pseudo-Zufallscode-Erzeugungseinrichtung 5, 6, ein Gate 8, 9, eine Modulations-/Sendeeinrichtung 10, 11, sowie eine Antenneneinrichtung 12, 13. Die Empfangseinheit 4 ist ähnlich wie die Sendeeinheiten 2, 3 aufgebaut, und weist eine Antenneneinrichtung 14, eine Funk-Empfangseinrichtung 15, eine Pseudo-Zufallscode-Erzeugungseinrichtung 7, ein Gate 16, sowie eine Demodulationseinrichtung 17 auf.

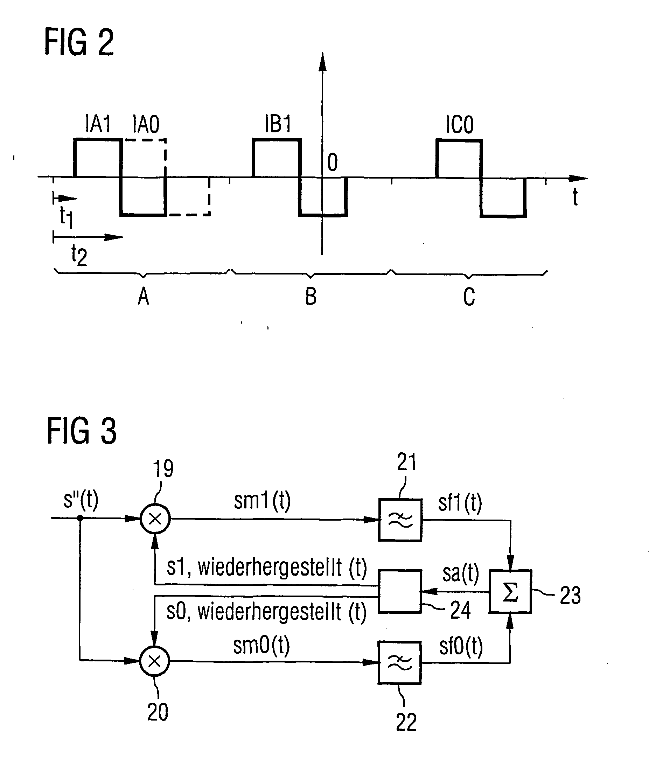

Der Informationsaustausch zwischen den Sendeeinheiten 2, 3 und der Empfangseinheit 4 erfolgt gemäß Figur 2 mittels Ultra-Breitband-Impulsen IA1, IB1, ICO. Um zu verhindern, daß sich die Impulse IA1, IB1, ICO der einzelnen Sendeeinheiten 2, 3 überlagern, werden die Impulse IA1, IB1, ICO im TDMA-Vielfachzugriffsverfahren übertragen ("TDMA" = time division multiplex access bzw. Zeitmultiplexzugriff). Dabei sind jeder Sendeeinheit 2, 3 jeweils bestimmte Zeitfenster A, B, C zugeordnet (beim hier gezeigten Ausführungsbeispiel ist der ersten Sendeeinheit 2 z.B. das Zeitfenster A zugeordnet, der zweiten Sendeeinheit 3 z.B. das Zeitfenster B, und einer weiteren, nicht dargestellten Sendeeinheit z.B. das Zeitfenster C). Die Zeitfenster A, B, C haben alle im wesentlichen die gleiche Länge, hier ca. 400 Pikosekunden. Die einer bestimmten Sendeeinheit 2, 3 zugeordneten Zeitfenster folgen in unregelmäßigen, von einem Pseudo-Zufallscode bestimmten zeitlichen Abständen aufeinander (Time Hopping).

Wieder bezogen auf Fig. 1 ist der der jeweiligen Sendeeinheit 2, 3 zugeordnete Pseudo-Zufallscode jeweils in der Pseudo-Zufallscode-Erzeugungseinrichtung 5, 6 der entsprechenden Sendeeinheit 2, 3 abgespeichert. Des weiteren sind in der Pseudo-Zufallscode-Erzeugungseinrichtung 7 der Empfangseinheit 4 die Pseudo-Zufallscodes derjenigen Sendeeinheiten 2, 3 gespeichert, von denen die Empfangseinheit 4 Informationen empfangen soll.

Werden z.B. von der ersten Sendeeinheit 2 aus Informationen (z.B. eine Folge von Datenbits) zur Empfangseinheit 4 übertragen, wird das die Informationen enthaltende Basisbandsignal BB dem Gate 8 zugeführt. Das jeweils zu übertragende Datenbit des Basisbandsignals BB wird vom Gate 8 zu dem vom entsprechenden Pseudo-Zufallscode definierten Zeitpunkt an die Modulations-/Sendeeinrichtung 10 weitergegeben.

In der Modulations-/Sendeeinrichtung 10 wird das zu übertragende Datenbit in einen UWB-Impuls umgewandelt. Dabei wird - bezogen auf den Takt der Sendeinheit 2 - die zeitliche Lage des UWB-Impulses in Abhängigkeit von der jeweils zu übertragenden Information gewählt (Impulslagemodulation bzw. PPM ("PPM" = pulse position modulation)). Wie in Fig. 2 gezeigt ist, beginnt - bezogen auf einen Bezugszeitpunkt, der aus dem synchronisierten Taktgenerator gewonnen wird - ein einer zu übertragenden "1" zugeordneter UWB-Impuls IA1 geringfügig früher, als ein UWB-Impuls IA0, mit dem eine "0" übertragen werden soll (in Fig. 2 gestrichelt dargestellt).

Beispielsweise beginnt der "1"-er Impuls IA1 eine erste vorbestimmte Zeitdauer t1 (hier: 50 Pikosekunden), und der "0"-er Impuls IA0 eine zweite, vorbestimmte Zeitdauer t2 (hier: 150 Pikosekunden) nach Beginn des der ersten Sendeeinheit 2 zugeordneten Zeitfensters A.

Als Impulse können beliebige, mittelwertfreie Impulse kurzer Dauer und hoher Bandbreite verwendet werden.

Bei dem hier beschriebenen Ausführungsbeispiel beträgt die Dauer der UWB-Impulse IA1, IB1, ICO ca. 200 Pikosekunden (Impulsdauer t). Die UWB-Impulse IA1, IB1, ICO haben jeweils die Form von Gauß-impulsförmigen, einperiodigen, monozyklischen Schwingungen (hier: die Form von Gauß-Impulsen erster Ableitung). Bei alternativen, hier nicht dargestellten Ausführungsbeispielen können stattdessen z.B. auch RechteckImpulse, Sägezahnimpulse, etc., und/oder statt einperiodiger Schwingungen halb- oder mehrperiodige Schwingungen verwendet werden (z.B. Schwingungen, die nur wenige Perioden umfassen, z.B. bi- oder trizyklische Rechteckschwingungen)).

Wieder bezogen auf Fig. 1 werden die in der ersten Sendeeinheit 2 erzeugten Impulse IA1 bzw. IA0 einem ebenfalls in der Modulations-/Sendeeinrichtung 10 enthaltenen Hochpassfilter zugeführt (nicht dargestellt). Dieses weist eine Grenzfrequenz von ca. 1 GHZ auf. Durch das Hochpassfilter werden aus dem von der Modulations-/Sendeeinrichtung 10 erzeugten Impulssignal Frequenzbereiche herausgefiltert, die unter 1 GHz liegen. Dadurch wird erreicht, dass das gefilterte UWB-Impulssignal s(t) keinen Gleichanteil aufweist (d.h. die durchschnittliche Impulsspannung bei 0V liegt). Außerdem wird vermieden, dass das UWB-Impulssignal s(t) von starken Fernseh- und Radiosendesignalen gestört wird.

Das gefilterte UWB-Impulssignal s(t) wird dann der Antenneneinrichtung 12 der ersten Sendeeinheit 2 zugeführt. Von dort wird das Signal s(t) per Funk an die Antenneneinrichtung 14 der Empfangseinheit 4 übertragen, und dann zunächst an deren Funk-Empfangseinrichtung 15, und von dort aus an das Gate 16 weitergeleitet (UWB-Empfangsimpulssignal s'(t)).

Wie oben bereits erwähnt, ist in der Pseudo-Zufallscode-Erzeugungseinrichtung 7 der Empfangseinheit 4 ein Pseudo-Zufallscode gespeichert, der von der Pseudo-Zufallscode-Erzeugungseinrichtung 7 an das Gate 16 geliefert wird. Dieses lässt das empfangene Impulssignal s'(t) nur während der vom Pseudo-Zufallscode definierten Zeiträume passieren, d.h. zu dem der Sendeeinheit 2 zugeordneten Zeitfenster A, in dem die Empfangseinheit 4 Informationen empfangen soll. Dadurch werden der Demodulationseinrichtung 17 nur diejenigen im Signal s(t) enthaltenen Impulse IA1' bzw. IA0' zugeführt, die von der ersten Sendeeinheit 2 stammen (Signal s"(t)).

Das von der Demodulationseinrichtung 17 erhaltene Signal s''(t) wird - entsprechend umgekehrt wie in der Modulations-/Sendeeinrichtung 10 der ersten Sendeeinheit 2 - in ein Basisbandsignal BB' zurückgewandelt. Hierzu wird in der Demodulationseinrichtung 17 ermittelt, ob - bezogen auf den Takt der Empfangseinheit 4 - ein Impuls relativ "früh", oder relativ "spät" empfangen wurde (siehe unten). Bei Ermittlung eines "frühen" Impulses IA1' gibt die Demodulationseinrichtung 17 ein Datenbit "1", und bei Ermittlung eines "späten" Impulses IA0' ein Datenbit "0" aus.

Um einen "frühen" oder "späten" Impuls auf exakte Weise ermitteln zu können, wird in der Demodulationseinrichtung 17 eine Taktsynchronisation vorgenommen. Dabei wird der Empfangseinheit-Takt aus dem empfangenen Impulssignal abgeleitet. Ein hierbei erzeugtes Synchronisationssignal Q wird gemäß Fig. 1 der Pseudo-Zufallscode-Erzeugungseinrichtung 7 zugeführt, und stellt dort sicher, daß die Funk-Empfangseinrichtung 15 das empfangene Impulssignal s'(t) während der exakt richtigen Zeiträume (Zeitfenster A) passieren läßt.

Die Takt-Synchronisation wird mit Hilfe einer in Fig. 3 gezeigten Synchronisationseinheit 18 durchgeführt.

Die Synchronisationseinheit 18 umfaßt einen ersten und zweiten Multiplizierer 19, 20, einen ersten Tiefpaß 21, einen zweiten Tiefpaß 22, einen Summierer 23, und eine Taktoszillator-Schaltungseinheit 24. Diese weist einen Schaltungsabschnitt auf, der im wesentlichen einer herkömmlichen PLL-Schaltung entspricht ("PLL" = Phase-Locked Loop bzw. Phasensynchronisationsschleife), dessen VCO ("VCO" = Voltage Controlled Oscillator bzw. spannungsgesteuerter Oszillator) im eingeschwungenen Zustand in Frequenz und Phase mit dem Takt der Sendeeinheit 2 übereinstimmt.

Der erste Multiplizierer 19 multipliziert das diesem zugeführte Impulssignal s' ' (t) mit einem von der Taktoszillator-Schaltungseinheit 24 erzeugten, "wiederhergestellten" ImpulsSignal s1_{wiederhergestellt}(t). Das Impulssignal s' ' (t) wird außerdem auch dem zweiten Multiplizierer 20 zugeführt, der dieses auf entsprechende Weise mit einem "wiederhergestellten" Impuls-Signal S0_{wiederhergestellt} (t) multipliziert, welches ebenfalls von der Taktoszillator-Schaltungseinheit 24 erzeugt wird.

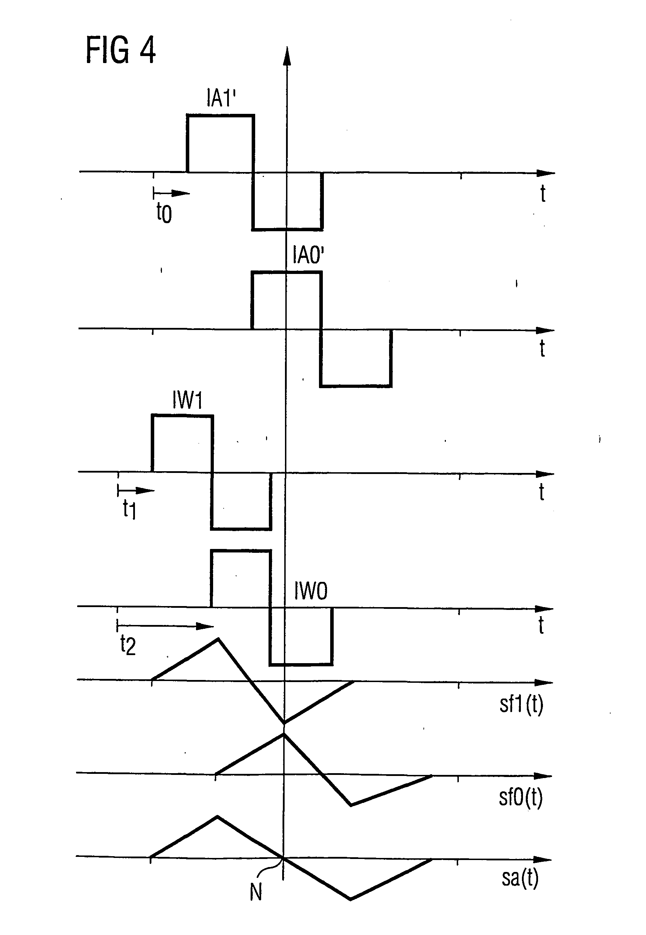

Die Signale S1_{wiederhergestellt} (t) bzw. Signal S0_{wiederhergestellt} (t) bestehen gemäß Fig. 4 aus einer Folge von Impulsen IW1 bzw.

IWO, die hinsichtlich Impulsform und Impulsdauer im wesentlichen den von der Sendeeinheit 2 empfangenen Impulsen IA1' bzw. IA0' entsprechen. Sie dienen der fortlaufenden Synchronisation des Empfangseinheits-Takts.

Die Taktoszillator-Schaltungseinheit 24 erzeugt, wie in Fig. 4 gezeigt, die in den Signalen S1_{wiederhergestellt} (t) bzw. s0_{wiederhergestellt} (t) enthaltenen Impulse IW1 bzw. IW0 in Bezug auf den momentan gültigen Empfangseinheits-Takt (bzw. in Bezug auf ein von diesem definiertes, dem Sendeeinheits-Zeitfenster A entsprechendes Zeitfenster A', wobei der Impuls IW1 die Zeitdauer t1 (hier: 50 Pikosekunden), und der Impuls IW0 die Zeitdauer t2 (hier: 150 Pikosekunden) nach Beginn des Zeitfensters A' beginnt).

Der zeitliche Versatz der Impulse IW1 bzw. IW0 gegenüber den empfangenen Impulsen IA1' bzw. IA0' entpricht der momentanen Taktabweichzeitdauer t0.

Das vom ersten Multiplizierer 19 erzeugte Multiplikationssignal sm1(t) wird (wieder bezogen auf Fig. 3) dem Tiefpaß 21, und das vom zweiten Multiplizierer 20 erzeugte Multiplikationssignal sm0(t) dem Tiefpaß 22 zugeführt. Die Grenzfrequenz der Tiefpässe 21, 22 ist jeweils so gewählt, dass aus den Multiplikationssignalen nur die Differenz-Frequenzanteile herausgefiltert werden, die deutlich unterhalb der Taktfrequenz f liegen. Wie in Fig. 4 gezeigt ist, sind in dem Fall, dass im Mittel gleich viele "frühe" Impulse IA1' empfangen werden, wie "späte" Impulse IAO', die von den Tiefpässen ausgegebenen Signale sf1(t) und sf0(t) identisch, jedoch zeitlich um eine halbe Impulsbreite versetzt.

Die gefilterten Signale sf1(t) bzw. sf0(t) werden in dem Summierer 23 addiert, und das Additionssignal sa(t) dann der Taktoszillator-Schaltungseinheit 24 zugeführt. Der Nullpunkt N des Additionssignals sa(t) fällt mit dem SynchronisationsSignal des Sendeeinheits-Taktgenerators zusammen. Die Abweichung zwischen Nullpunkt N des Additionssignals sa(t) und dem Nullpunkt des Empfangseinheits-Takts stellt damit ein Maß für die Taktabweichung dar.

Der VCO der Taktoszillator-Schaltungseinheit 24 kann somit mit einer entsprechend wie bei herkömmlichen PLL-Schaltungen aufgebauten Regelschleife so angesteuert werden, dass die Taktabweichung eliminiert wird. Durch die erfindungsgemäße Synchronisationseinheit 18 kann also der Empfangseinheits-Takt in den Fangbereich gebracht, und dann mit relativ hoher Genauigkeit im Fangbereich gehalten werden. Dadurch kann mit hoher Gewissheit bestimmt werden, ob ein Impuls relativ "früh", oder relativ "spät", d.h. ob ein Datenbit "1", oder ein Datenbit "0" empfangen wurde.

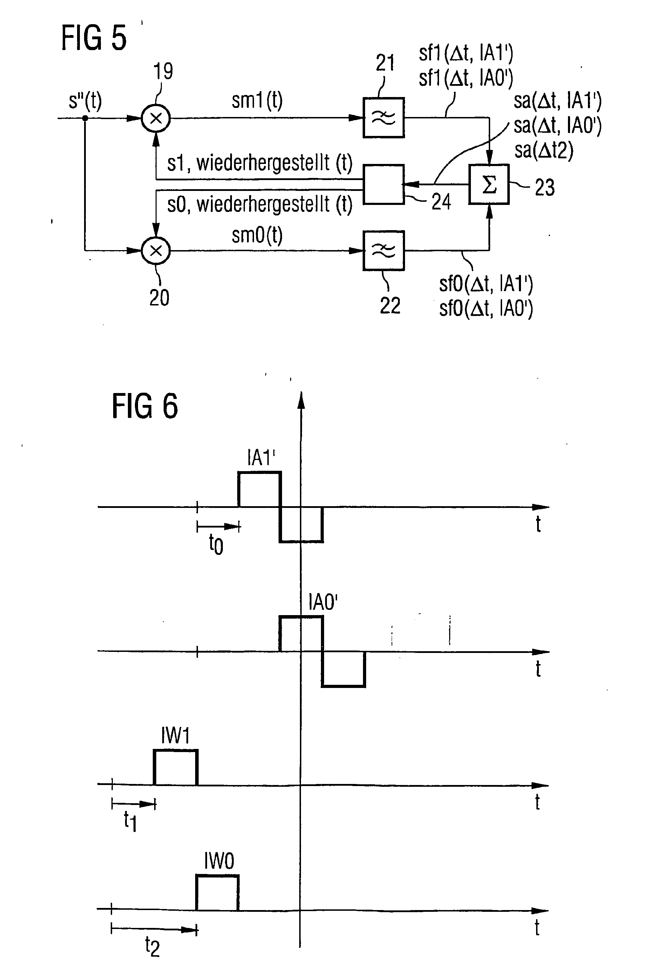

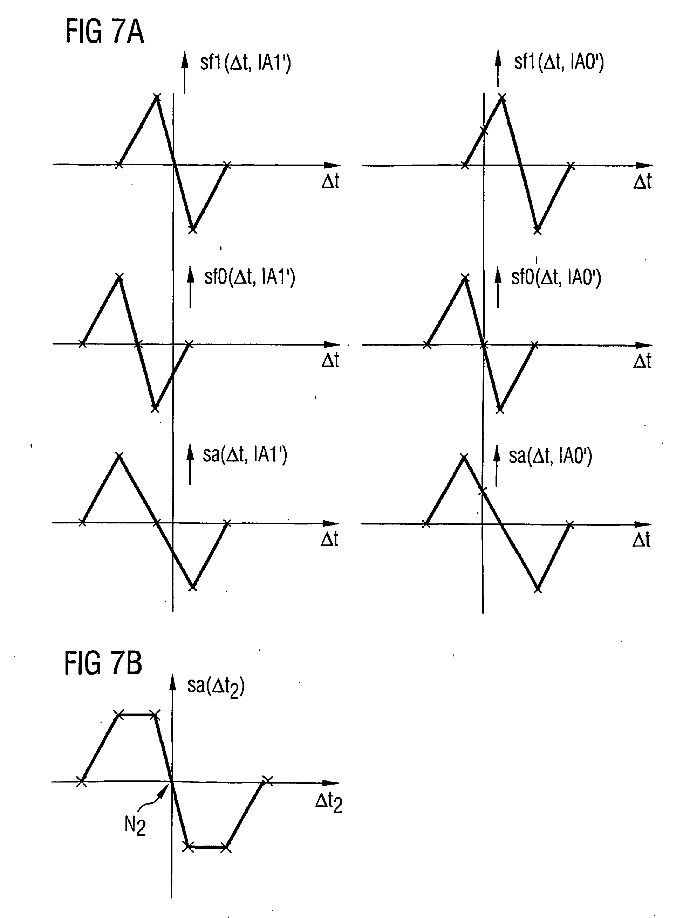

Figur 5 zeigt die aus Figur 3 bekannte Synchronisationseinheit mit detaillierter Signaldiagrammbezeichnung. Die detaillierten Signaldiagramme zu Figur 5 sind in Figur 6 und in Figur 7 als Figur 7a und Figur 7b dargestellt.

Die in Figur 6 dargestellten Signale s1_{wiederhergestellt}(t) bzw. s0_{wiederhergestellt}(t) setzen sich aus einer Folge von Rechteckimpulsen IW1 bzw. IW0 zusammen, die vergleichend zu den Impulsen IA1' und IA0' eine entsprechende relative Zeitlage zueinander aufweisen. Die Rechteckimpulse IW1 bzw. IW0 dienen wiederum der fortlaufenden Synchronisation des Empfangseinheits-Takts.

Wie in Figur 7a dargestellt, erzeugen die Impulse IA1' und IA0' an den Ausgängen der Tiefpässe 21 und 22 Teilsignale sf1(Δt,IA1'), sf0(Δt,IA1'), sf1(Δt,IA0') und sf0 (Δt, IA0'), die in Abhängigkeit von einem als Differenz zwischen Taktoszillatorsignal und Eingangssignal s"(t) definierten Zeitversatz Δt Gleichspannungen entsprechen.

Die Teilsignale sf1(Δt,IA1') und sf0(Δt, IA1') werden linear überlagert und es ergibt sich ein Summensignal sa(Δt, IA1') als Folge der Impulse IA1'. Entsprechend führt die Überlagerung der Teilsignale sf1 (Δt, IA0') und sf0 (Δt, IA0') zu einem Summensignal sa (Δt, IA0') als Folge der Impulse IA0'.

Für den Fall, dass im Mittel gleich viele Impulse IA1'und IA0' auftreten, sind die Tiefpass-Ausgangssignale um den als Synchronisationspunkt betrachteten Nullpunkt N2 Gleichspannungen.

Ein gemitteltes Ausgangssignal sa (Δt2) des Summierers 23 ist in Figur 7b dargestellt und beschreibt eine Diskriminatorkennlinie der Taktsynchronisationseinrichtung.

## Patentansprüche

1. Ultra-Breitband-Empfangsverfahren, bei dem eine Empfangseinheit (4) ein von einer Sendeeinheit (2) ausgesendetes, impulslagemoduliertes Ultra-Breitband-Impulssignal (s) empfängt, wobei zur sendeseitigen Impulslagenmodulation für das Ultra-Breitband-Impulssignal (s) eine auf einen Takt der Sendeeinheit bezogene zeitliche Lage in Abhängigkeit von einer zu übertragenden Information gewählt wird,
**dadurch gekennzeichnet,**
- **dass** das empfangene Ultra-Breitband-Impulssignal (s") multipliziert wird mit in Abhängigkeit vom Takt der Empfangseinheit (4) wiederhergestellten Ultra-Breitband-Impulsen (IW1, s1_{wiederhergestellt}), die auf den Takt der Empfangseinheit bezogen früher auftreten,
- **dass** das empfangene. Ultra-Breitband-Impulssignal (s'') multipliziert wird mit in Abhängigkeit vom Takt der Empfangseinheit (4) wiederhergestellten Ultra-Breitband-Impulsen (IW0, s0_{wiederhergestellt}), die auf den Takt der Empfangseinheit bezogen später auftreten,
- **dass** bei den Multiplikationen erzeugte Multiplikationssignale. (sm1, sm0) zur Synchronisation der Empfangseinheit (4) verwendet werden.

2. Ultra-Breitband-Empfangsverfahren nach Anspruch 1, **dadurch gekennzeichnet, dass** die bei den Multiplikationen erzeugten Multiplikationssignale (sm1, sm0) tiefpassgefiltert werden.

3. Ultra-Breitband-Empfangsverfahren nach Anspruch 1 oder 2, **dadurch gekennzeichnet, dass** die Multiplikationssignale (sm1,sm0) zu einem Additionssignal (sa) addiert werden.

4. Ultra-Breitband-Empfangsverfahren nach Anspruch 3, **dadurch gekennzeichnet, dass** das Additionssignal (sa) zur Phasenregelung eines den Takt der Empfangseinheit (4) erzeugenden Oszillators verwendet wird.

5. Empfangseinheit (4) für ein Ultra-Breitband-Konmunikationssystem, mit dem ein gesendetes impulslagemoduliertes Ultra-Breitband-Impulssignal (s) empfangen und demoduliert wird, wobei zur sendeseitigen Impulslagenmodulation für das Ultra-Breitband-Impulssignal (s) eine auf einen Takt einer Sendeeinheit bezogene zeitliche Lage in Abhängigkeit von einer zu übertragenden Information gewählt wird,
**dadurch gekennzeichnet ,**
**dass** die Empfangseinheit (4) eine Synchronisationseinrichtung aufweist, die zur Synchronisation der Empfangseinheit (4) einerseits das empfangene Ultra-Breitband-Impulssignal (s'') mit in Abhängigkeit vom Takt der Empfangseinheit (4) wiederhergestellten Ultra-Breitband-Impulsen (IW1, s1_{wiederhergestellt}) multipliziert, die auf den Takt der Empfangseinheit bezogen früher auftreten, und die andererseits das Ultra-Breitband-Impulssignal (s") mit in Abhängigkeit vom Takt der Empfangseinheit (4) wiederhergestellten Ultra-Breitband-Impulsen (IW0, s0_{wiederhergestellt)} multipliziert, die auf den Takt der Enipfangseinheit bezogen später auftreten.

6. Empfangseinheit (4) nach Anspruch 5, **dadurch gekennzeichnet, dass** die Synchronisationseinrichtung zur Bildung eines ersten Multiplikationssignals (sm1) einen ersten Multiplizierer (19) aufweist, an den einerseits das empfangene Ultra-Breitband-Impulssignal (s") und an den andererseits die in Abhängigkeit vom Takt der Empfangseinheit> (4) wiederhergestellten früheren Ultra-Breitband-Impulse (IW1, s1_{wiederhergestellt}) angeschaltet sind.

7. Empfangseinheit (4) nach Anspruch 5 oder 6, **dadurch gekennzeichnet, dass** die Synchronisationseinrichtung zur Bildung eines zweiten Multiplikationssignals (sm0) einen zweiten Multiplizierer (19) aufweist, an den einerseits das empfangene Ultra-Breitband-Impulssignal (s'') und an den andererseits die in Abhängigkeit vom Takt der Empfangseinheit (4) wiederhergestellten späteren Ultra-Breitband-Impulse (IW0, s0_{wiederhergestellt}) angeschaltet sind.

8. Empfangseinheit (4) nach Anspruch 6 und 7, **dadurch gekennzeichnet, dass** die Synchronisationseinrichtung einen ersten und einen zweiten Tiefpassfilter (21,22) aufweist, wobei an den ersten Tiefpassfilter (21) das erste Multiplikationssignal (sm1) und an den zweiten Tiefpassfilter (22) das zweite Multiplikationssignal (sm0) angeschaltet ist.

9. Empfangseinheit (4) nach Anspruch 8, **dadurch gekennzeichnet, dass** die Synchrhonisationseinrichtung einen Addierer (23) zur Bildung eines Additionssignals (sa) aufweist, an dem die beiden tiefpassgefilterten Multiplikationssignale (sm1,sm0) angeschaltet sind.

10. Empfangseinheit (4) nach Anspruch 9, **dadurch gekennzeichnet, dass** die Synchronisationseinrichtung einen den Takt der Empfangseinheit (4) erzeugenden Oszillator aufweist, zu dessen Phasenregelung das durch Addition erzeugte Additionssignal (sa) verwendet wird.

11. Ultra-Breitband-Kommunikationssystem mit Mitteln zur Durchführung der Schritte des Verfahrens nach einem der Ansprüche 1 bis 4.

12. Ultra-Breitband-Kommunikationssystem mit einer Empfangseinheit nach einem der Ansprüche 5 bis 9.

## Claims

1. Ultra wideband receive method in which a receive unit (4) receives a pulse position modulated ultra wideband pulse signal (s) which is emitted from a send unit (2), wherein for the purpose of sender-side pulse position modulation for the ultra wideband pulse signal (s), a time position relative to a clock of the send unit is selected depending on information which is to be transmitted,
**characterised in that**
- the received ultra wideband pulse signal (s") is multiplied by ultra wideband pulses (IW1, s1_{reconstructed}) which are reconstructed depending on the clock of the receive unit (4), said pulses occurring earlier relative to the clock of the receive unit,
- that the received ultra wideband pulse signal (s") is multiplied by ultra wideband pulses (IW0, s0_{reconstructed}) which are reconstructed depending on the clock of the receive unit (4), said pulses occurring later relative to the clock of the receive unit, and
- that multiplication signals (sm1,sm0) which are generated during the multiplications are used for synchronisation of the receive unit (4).

2. Ultra wideband receive method according to claim 1, **characterised in that** the multiplication signals (sm1, sm0) which are generated during the multiplications are lowpass filtered.

3. Ultra wideband receive method according to claim 1 or 2, **characterised in that** the multiplication signals (sm1, sm0) are added to give an addition signal (sa).

4. Ultra wideband receive method according to claim 3, **characterised in that** the addition signal (sa) is used for phase adjustment of an oscillator which generates the clock of the receive unit (4).

5. Receive unit (4) for an ultra wideband communication system by means of which a sent pulse position modulated ultra wideband pulse signal (s) is received and demodulated wherein, for the purpose of sender-side pulse position modulation for the ultra wideband pulse signal (s), a time position relative to a clock of the send unit is selected depending on information which is to be transmitted,
**characterised in that**
the receive unit (4) has a synchronisation entity which, for the purpose of synchronising the receive unit (4), on the one hand multiplies the received ultra wideband pulse signal (s") by ultra wideband pulses (IW1, s1_{reconstructed}) which are reconstructed depending on the clock of the receive unit (4), said pulses occurring earlier relative to the clock of the receive unit, and on the other hand multiplies the received ultra wideband pulse signal (s") by ultra wideband pulses (IW0, s0_{reconstructed}) which are reconstructed depending on the clock of the receive unit (4), said pulses occurring later relative to the clock of the receive unit.

6. Receive unit (4) according to claim 5, **characterised in that** for the purpose of forming a first multiplication signal (sm1), the synchronisation entity has a first multiplier (19) to which are connected both the received ultra wideband pulse signal (s") and the earlier ultra wideband pulses (IW1, s1_{reconstructed}) which are reconstructed depending on the clock of the receive unit (4).

7. Receive unit (4) according to claim 5 or 6, **characterised in that** for the purpose of forming a second multiplication signal (sm0), the synchronisation entity has a second multiplier (19) to which are connected both the received ultra wideband pulse signal (s") and the later ultra wideband pulses (IW0, s0_{reconstructed}) which are reconstructed depending on the clock of the receive unit (4) .

8. Receive unit (4) according to claim 6 and 7, **characterised in that** the synchronisation entity has a first and a second low-pass filter (21,22), wherein the first multiplication signal (sm1) is connected to the first low-pass filter (21) and the second multiplication signal (sm0) is connected to the second low-pass filter (22).

9. Receive unit (4) according to claim 8, **characterised in that** the synchronisation entity has an adder (23) for forming an addition signal (sa), wherein the two lowpass filtered multiplication signals (sm1, sm0) are connected to said adder.

10. Receive unit (4) according to claim 9, **characterised in that** the synchronisation entity has an oscillator which generates the clock of the receive unit (4), wherein the addition signal (sa) which is generated by addition is used for the phase adjustment of said oscillator.

11. Ultra wideband communication system having means for carrying out the steps of the method according to one of the claims 1 to 4.

12. Ultra wideband communication system having a receive unit according to one of the claims 5 to 9.

## Revendications

1. Procédé de réception à bande ultralarge, dans lequel une unité de réception (4) reçoit un signal d'impulsion à bande ultralarge (s) émis par une unité d'émission (2) avec modulation de position d'impulsion, une position dans le temps rapportée à un rythme de l'unité d'émission étant choisie en fonction d'une information à transmettre pour la modulation de position d'impulsion côté émission pour le signal d'impulsion à bande ultralarge (s),
**caractérisé en ce que**
- le signal d'impulsion à bande ultralarge (s") reçu est multiplié avec des impulsions à bande ultralarge (IW1, s1_{reconstitué}) reconstituées en fonction du rythme de l'unité de réception (4), qui apparaissent plus tôt par rapport au rythme de l'unité de réception,
- **en ce que** le signal d'impulsion à bande ultralarge (s") reçu est multiplié avec des impulsions à bande ultralarge (IW0, s0_{reconstitué}) reconstituées en fonction du rythme de l'unité de réception (4), qui apparaissent plus tard par rapport au rythme de l'unité de réception,
- **en ce que** des signaux de multiplication (sm1, sm0) générés lors des multiplications sont utilisés pour la synchronisation de l'unité de réception (4).

2. Procédé de réception à bande ultralarge selon la revendication 1, **caractérisé en ce que** les signaux de multiplication (sm1, sm0) générés lors des multiplications sont filtrés avec un filtre passe-bas.

3. Procédé de réception à bande ultralarge selon la revendication 1 ou 2, **caractérisé en ce que** les signaux de multiplication (sm1, sm0) sont additionnés pour former un signal d'addition (sa).

4. Procédé de réception à bande ultralarge selon la revendication 3, **caractérisé en ce que** le signal d'addition (sa) est utilisé pour le réglage de phase d'un oscillateur générant le rythme de l'unité de réception (4).

5. Unité de réception (4) pour un système de communication à bande ultralarge, avec lequel un signal d'impulsion à bande ultralarge (s) envoyé avec modulation de position d'impulsion est reçu et démodulé, une position dans le temps rapportée à un rythme d'une unité d'émission étant choisie en fonction d'une information à transmettre pour la modulation de position d'impulsion côté émission pour le signal d'impulsion à bande ultralarge (s),
**caractérisé en ce que**
l'unité de réception (4) présente un dispositif de synchronisation qui, pour la synchronisation de l'unité de réception (4), multiplie d'une part le signal d'impulsion à bande ultralarge (s'') reçu avec des impulsions à bande ultralarge IW1, s1_{reconstitué}) reconstituées en fonction du rythme de l'unité de réception (4), qui apparaissent plus tôt par rapport au rythme de l'unité de réception, et qui d'autre part multiplie le signal d'impulsion à bande ultralarge (s") avec des impulsions à bande ultralarge (IW0, s0_{reconstitué}) reconstituées en fonction du rythme de l'unité de réception (4), lesquelles impulsions apparaissent plus tard par rapport au rythme de l'unité de réception.

6. Unité de réception (4) selon la revendication 5, **caractérisée en ce que** le dispositif de synchronisation présente pour former un premier signal de multiplication (sm1) un premier multiplicateur (19) auquel sont raccordés d'une part le signal d'impulsion à bande ultralarge (s'') reçu et d'autre part des impulsions à bande ultralarge (IW1, s1_{reconstitué}) reconstituées en fonction du rythme de l'unité de réception (4).

7. Unité de réception (4) selon la revendication 5 ou 6, **caractérisée en ce que** le dispositif de synchronisation présente pour former un second signal de multiplication (sm0) un second multiplicateur (19) auquel sont raccordés d'une part le signal d'impulsion à bande ultralarge (s'') reçu, d'autre part les impulsions à bande ultralarge (IW0, s0_{reconstitué}) reconstituées en fonction du rythme de l'unité de réception (4).

8. Unité de réception (4) selon les revendications 6 et 7, **caractérisée en ce que** le dispositif de synchronisation présente un premier et un second filtre passe-bas (21, 22), le premier signal de multiplication (sm1) étant raccordé au premier filtre passe-bas (21) et le second signal de multiplication (sm0) étant raccordé au second filtre passe-bas (22).

9. Unité de réception (4) selon la revendication 8, **caractérisée en ce que** le dispositif de synchronisation présente un additionneur (23) pour la formation d'un signal d'addition (sa) auquel sont raccordés les signaux de multiplication (sm1, sm0) filtrés avec un filtre passe-bas.

10. Unité de réception (4) selon la revendication 9, **caractérisée en ce que** le dispositif de synchronisation présente un oscillateur générant le rythme de l'unité de réception (4), pour le réglage de phase duquel on utilise le signal d'addition (sa) généré par addition.

11. Système de communication à bande ultralarge avec des moyens pour la mise en oeuvre des étapes du procédé selon l'une quelconque des revendications 1 à 4.

12. Système de communication à bande ultralarge comprenant une unité de réception selon l'une quelconque des revendications 5 à 9.
